# EUROPÄISCHE PATENTSCHRIFT

(11) **EP 1 353 246 B1**
(45) Veröffentlichungstag und Bekanntmachung des Hinweises auf die Patenterteilung: **09.11.2005**
(21) Anmeldenummer: 03005564.4
(22) Anmeldetag: 12.03.2003
(51) Int. Cl.: G05B 9/02, G05B 19/418

(54) **Sicherheitsschalteranordnung**
Safety switch arrangement
Dispositif de commutation de sécurité

(30) Priorität: 26.03.2002 DE 10213446
(43) Veröffentlichungstag der Anmeldung: 15.10.2003
(73) Patentinhaber: Leuze electronic GmbH + Co KG, 73277 Owen/Teck (DE)
(72) Erfinder: Wiesgickl, Bernhard, 92249 Vilseck (DE); Knaus, Karsten, 73061 Ebersbach (DE); Müller, Bernhard Dr., 71083 Herrenberg (DE)
(74) Vertreter: Ruckh, Rainer Gerhard

(56) Entgegenhaltungen:
- DE-A- 19 629 868
- DE-A- 19 815 148
- DE-A- 19 815 150
- DE-A- 19 909 091
- DE-A- 19 927 635
- GB-A- 2 358 559

## Beschreibung

Die Erfindung betrifft eine Sicherheitsschalteranordnung gemäß dem Oberbegriff des Anspruchs 1.

Derartige Sicherheitsschalteranordnungen werden insbesondere zum sicheren Ein- und Ausschalten von Arbeitsgeräten eingesetzt, die in sicherheitskritischen Applikationen eingesetzt werden. Beispiele für derartige Arbeitsgeräte sind Pressen, Abkantmaschinen und dergleichen. Bei derartigen Arbeitsgeräten werden Gefahrenbereiche mittels Sensoren und dergleichen überwacht, um Gefährdungen von Bedienpersonen auszuschließen. Eine Freigabe eines Arbeitsgerätes erfolgt über die jeweilige Sicherheitsschalteranordnung nur dann, wenn sich kein Objekt bzw. keine Person im jeweiligen Gefahrenbereich befindet

Bei komplexen Anlagen werden typischerweise eine Vielzahl von Sensoren und Aktoren zum Betrieb und zur Überwachung derartiger Arbeitsgeräte benötigt.

Die DE 198 15 147 A1 betrifft eine Anordnung von Sensoren zur Überwachung eines Arbeitsgerätes, welches in Abhängigkeit der Schaltzustände der Sensoren in Betrieb setzbar ist, wobei die Sensoren Slaves eines nach dem Master-Slave-Prinzip arbeitenden Bussystems bilden, welches von einer den Master bildenden Steuereinheit gesteuert ist. An das Bussystem ist eine redundante Auswerteeinheit angeschlossen, welche fortlaufend die über das Bussystem übertragenen Signale abhört. In der Auswerteeinheit werden aus den Signalen der Sensoren, welchen eine individuelle Kodierung aufgeprägt ist, deren Schaltzustände ermittelt. Nur bei fehlerfreier Identifizierung der Kodierung wird das Arbeitsgerät über die Auswerteeinheit in Betrieb gesetzt.

Die redundante Auswerteeinheit dieser Anordnung bildet einen Sicherheitsmonitor. Dieser Sicherheitsmonitor ermittelt zentral aus den Kodierungen der Steuersignale die Schaltzustände der Sensoren, wobei dann in Abhängigkeit dieser Schaltzustände die Aktivierung oder Deaktivierung eines Arbeitsgerätes zentral gesteuert wird.

Die DE 198 15 148 A1 betrifft eine Anordnung von Sensoren zur Überwachung eines Arbeitsgerätes, welches in Abhängigkeit der Schaltzustände der Sensoren in Betrieb setzbar ist, wobei die Sensoren Slaves eines nach dem Master-Slave-Prinzip arbeitenden Bussystems bilden, welches von einer den Master bildenden Steuereinheit gesteuert ist. An das Bussystem ist eine redudante Auswerteeinheit angeschlossen, welche fortlaufend die über das Bussystem übertragenen Signale abhört. Die Sensoren sind von Türwächtern gebildet, welche jeweils bei geschlossener Tür Signale mit einer individuellen Kodierung erzeugen. Nur bei fehlerfreier Identifizierung der Kodierung wird das Arbeitsgerät über die Auswerteeinheit in Betrieb gesetzt.

Die DE 199 27 635 A1 betrifft ein sicherheitsbezogenes Automatisierungssystem und ein Verfahren zum Betrieb eines derartigen Systems. Das Automatisierungssystem umfasst zumindest einen Sicherheitsanalysator, der mittels einer Schnittstelle an den Bus angeschlossen ist und den Datenfluss über den Bus mithört, wobei der Analysator zum Ausführen von sicherheitsbezogenen Funktionen eingerichtet ist. Das Automatisierungssystem zeichnet sich dadurch aus, dass die Standardsteuereinrichtung zumindest einen sicherheitsbezogenen Ausgang ansteuert und der Sicherheitsanalysator zur Überprüfung und/oder zum Verarbeiten von sicherheitsbezogenen Daten im Busdatenstrom ausgebildet ist.

Ausgehend von diesem Stand der Technik liegt der Erfindung die Aufgabe zugruude, ein erweitertes Sicherheitskonzept für die eingangs genannte Sicherheitsschalteranordnung bereitzustellen.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Sicherheitsschalteranordnung weist eine vorgegebene Anzahl von Schaltsignalen generierenden Ausgangsstufen, wobei in Abhängigkeit der Schaltsignale an die Ausgangsstufen angeschlossene Arbeitsgeräte aktivierbar oder deaktivierbar sind. Die Ausgangsstufen Slaves bilden eines nach dem Master-Slave-Prinzip arbeitenden Bussystem, welchem wenigstens ein Sicherheitsmonitor zum Abhören der über das Bussystem übertragenen Signale zugeordnet ist. Während des Betriebs des Bussystems sind die Slaves in Abhängigkeit von im Sicherheitsmonitor hinterlegten Codes steuerbar. Auf einen vom Master an den Sicherheitsmonitor gesendeten Master-Request-Aufruf MR1 wird ein Code als Antwort SR1 von dem Sicherheitsmonitor an den Master gesendet und von den Slaves mitgehört und dabei in diese eingelesen. In den jeweiligen Slaves wird der empfangene Code kontrolliert wobei das Ergebnis der Kontrolle als Antwort SR2 auf einen zweiten Master-Request-Aufruf MR2 des Masters an diesen zurückgesendet und vom Sicherheitsmonitor mitgehört wird. Mittels des Sicherheitsmonitors sind während einer Konfigurationsphase Komponenten als Slaves des Bussystems konfigurierbar und/oder anschließbar.

Der Grundgedanke der Erfindung besteht somit darin, dass der oder jeder Sicherheitsmonitor nicht nur während des Betriebs des Bussystems, sondern auch während der Konfigurationsphase zur Konfigurierung des Bussystems oder Komponenten hiervon die wesentlichen Sicherheitsfunktionen zur Einhaltung einer vorgegebenen Sicherheitskategorie übernimmt.

Zweckmäßigerweise weist der Sicherheitsmonitor zur Einhaltung der geforderten Sicherheitskategorie einen redundanten Aufbau auf.

Während der vom Sicherheitsmonitor gesteuerten Konfigurationsphasen können nicht nur Komponenten des Bussystems, insbesondere Slaves, konfiguriert sondern auch ausgetauscht werden.

Wesentlich ist, dass durch die zentrale Steuerung der Konfigurierung über den Sicherheitsmonitor eine definierte Hardwarestruktur zur Durchführung der Konfigurierung vorgegeben ist. Die Konfigurierung ist damit durch technische Maßnahmen eindeutig definiert.

Dabei ist insbesondere vorteilhaft, dass für die Konfigurierung keine externen Einheiten wie der Master oder eine an diesen angeschlossene Steuerung benötigt werden.

In einer ersten Ausführungsform wird der Master bei der Durchführung der Konfigurierung lediglich zur Bereitstellung der Steuerungsfunktionen des Bussystems benötigt, während die sicherheitsrelevanten Funktionen zur Durchführung der Konfigurierung alleine von dem Sicherheitsmonitor übernommen werden.

In einer zweiten besonders vorteilhaften Ausführungsform ist der Master während der Konfigurierung sogar deaktiviert. Dann werden die Masterfunktionen von dem oder einem Sicherheitsmonitor mit übernommen.

In beiden Fällen werden durch die komplette Übernahme der Funktionen zur Konfigurierung des Bussystems durch den Sicherheitsmonitor die Anforderungen gemäß der geforderten Sicherheitskategorie erfüllt.

Dabei ist insbesondere vorteilhaft, dass sämtliche sicherheitsrelevanten Daten des Bussystems, die bei der Konfigurierung definiert werden, im Sicherheitsmonitor hinterlegbar und zentral von diesem abgerufen werden können.

Die Erfindung wird im Nachstehenden anhand der Zeichnungen erläutert. Es zeigen:
- Figur 1:: Schematische Darstellung eines Ausführungsbeispiels der erfindungsgemäßen Sicherheitsschalteranordnung.
- Figur 2:: Erste Ausführungsform der Datenübertragung zwischen Komponenten einer Sicherheitsschalteranordnung gemäß Figur 1.
- Figur 3:: Zweite Ausführungsform der Datenübertragung zwischen Komponenten einer Sicherheitsschalteranordnung gemäß Figur 2.
- Figur 4:: Sicherheitsschalteranordnung gemäß Figur 1 mit einer Konfigurations-Beschaltung.
- Figur 5:: Ausführungsform der Datenüberübertragung zwischen Komponenten einer weiteren Sicherheitsschalteranordnung.

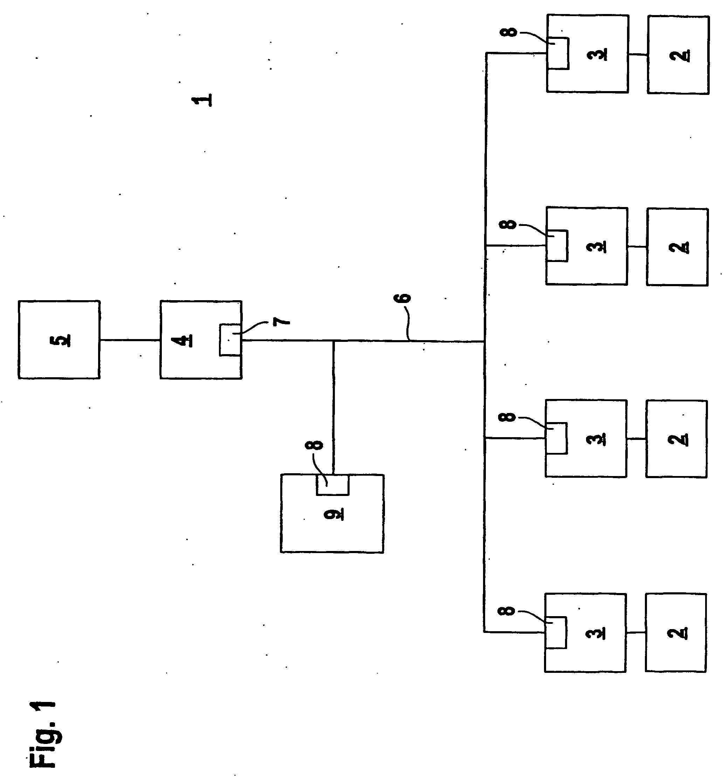

Figur 1 zeigt schematisch den Aufbau einer Sicherheitsschalteranordnung 1. Die Sicherheitsschalteranordnung 1 besteht im Wesentlichen aus einem nach dem Master-Slave-Prinzip arbeitenden Sensor-Aktor-Bussystem und dient zum Aktivieren und Deaktivieren einer Anzahl von Arbeitsgeräten 2, 2'. Die Arbeitsgeräte 2, 2' bestehen im vorliegenden Fall von einer Anordnung von Motoren, mit welchen ein sicherheitsrelevanter Prozess gesteuert wird.

Die Motoren werden jeweils von einer Ausgangsstufe 3 angesteuert. Im vorliegenden Fall sind die Ausgangsstufen 3, 3' jeweils von einem Aktor, insbesondere einem oder mehreren Relais gebildet.

Die Ausgangsstufen 3, 3' bilden Slaves des Bussystems. Das Bussystem wird von einem Master 4 zentral gesteuert, welcher wiederum an eine Steuerung, insbesondere eine SPS-Steuerung 5 angeschlossen ist. Der Master 4 ist von einer Steuerschaltung gebildet. Der Master 4 und die Slaves sind über Busleitungen 6 miteinander verbunden. Die Stromversorgung des so gebildeten Sensor-Aktor-Bussystems erfolgt über ein nicht dargestelltes Netzteil.

Der Master 4 fragt die einzelnen Slaves unter vorgegebenen Adressen zyklisch ab, worauf jeder Slave eine Antwort an den Master 4 sendet.

Im vorliegenden Fall ist das Bussystem vom ASi-Bussystem gebildet. Das ASi-Bussystem ist insbesondere für den Anschluss von binären Sensoren und Aktoren konzipiert. Die Funktionsweise des ASi-Bussystems ist in "ASI - Das Aktuator Sensor Interface für die Automation", Werner Kriesel, Otto W. Madelung, Carl Hanser Verlag, 1994 beschrieben, dessen Inhalt in den Offenbarungsgehalt dieser Anmeldung miteinbezogen wird.

Beim ASi-Bussystem besteht ein Masteraufruf (master request MR) aus einem Startbit, einer 5 Bitbreiten Adresse, 2 Bit Steuerinformation, 4 Bit Nutzdaten sowie jeweils einem Paritäts- und Stopp-Bit. Die zugehörige Slaveantwort (slave response SR) enthält ein Start-Bit, 4 Bit Nutzdaten sowie jeweils ein Paritäts- und Stopp-Bit. Ein Slave überprüft den empfangenen Masteraufruf anhand vorgegebener ASi-spezifischer Kodierungsregeln. Erkennt der Slave einen gültigen Masteraufruf, so sendet er eine entsprechende Antwort. In allen anderen Fällen aritwortet er nicht. Ebenso verwirft der Master 4 eine Slaveantwort, wenn sie den entsprechenden Kodierungsregeln nicht entspricht.

Die Daten sind Manchester-kodiert und werden als alternierende, sin²-förmige Spannungsimpulse über die Busleitungen 6 übertragen.

Hierzu ist dem Master 4 eine Analogschaltung 7 zugeordnet, welche ein jeweils nicht dargestelltes Sendeelement und ein Empfangselement aufweist. Im Sendeelement werden die binären Daten eines Masteraufrufs in eine Folge von sin²-förmigen Spannungsimpulse umgewandelt. Diese Signale werden über die Busleitungen 6 an die Slaves gesendet. Die von den Slaves über die Busleitungen 6 an den Master 4 gesendeten Signale werden in dem Empfangselement in binäre Datenfolgen umgewandelt.

Jeder Slave weist einen Schnittstellenbaustein 8 auf, der in dem vorliegenden Beispiel von einem Asi-IC gebildet ist. Im Schnittstellenbaustein 8 werden die über die Busleitung 6 empfangenen Folgen von sin²-förmigen Spannungsimpulsen in binäre Daten gewandelt. Des weiteren wird im Schnittstellenbaustein 8 die in Form von binären Daten vorliegende Slaveantwort in eine Folge von sin²-förmigen Spannungsimpulsen und über die Busleitungen 6 an den Master 4 gesendet.

Zur Überprüfung der über die Busleitungen 6 gesendeten Signale ist ein redundanter Sicherheitsmonitor 9 mit zwei sich überwachenden Prozessoreinheiten an das Bussystem angeschlossen. Die Prozessoreinheiten sind vorzugsweise von identisch aufgebauten Mikroprozessoren gebildet. Der Sicherheitsmonitor 9 stellt einerseits einen rein passiven Busteilnehmer dar, der fortlaufend die auf den Busleitungen 6 übertragenen Signale abhört. Andererseits besitzt der Sicherheitsmonitor 9 einen Schnittstellenbaustein 8, wodurch dieser als Slave Signale auf das Bussystem ausgeben kann.

Prinzipiell sind auch Konfigurationen möglich, bei welchen der Master 4 im Sicherheitsmonitor 9 integriert ist. Weiterhin können prinzipiell auch mehrere Sicherheitsmonitore 9 vorgesehen sein.

Bei der Sicherheitsschalteranordnung 1 übernimmt der Master 4 allein die Steuerung der Funktionen des Bussystems. Sämtliche sicherheitsrelevanten Funktionen werden dagegen von dem Sicherheitsmonitor 9 übernommen. Der Master 4 weist einen einkanaligen Aufbau auf.

Die Ausgangsstufen 3, 3' als Slaves des Bussystems dienen zum Aktivieren und Deaktivieren der Arbeitsgeräte 2, 2'. Damit erfüllen die Ausgangsstufen 3, 3' sicherheitsrelevante Funktionen und weisen typischerweise einen redundanten Aufbau auf.

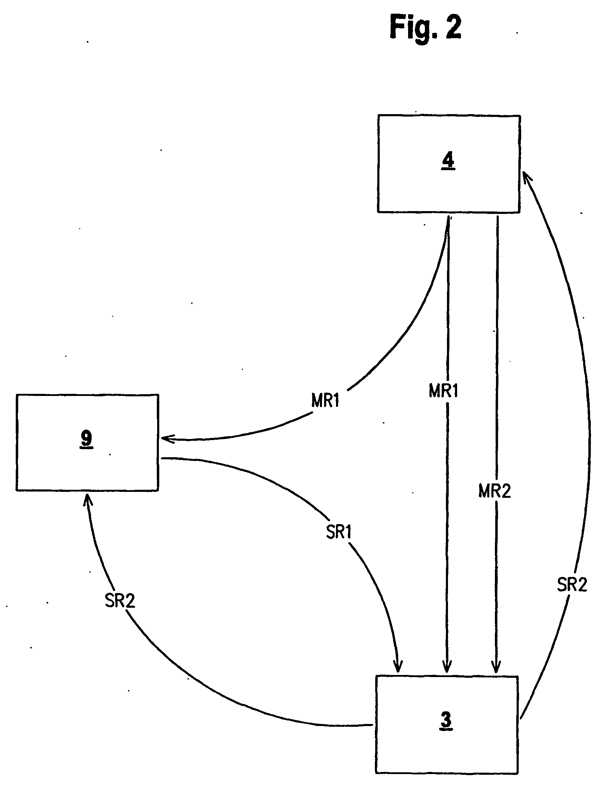

In Figur 2 ist das Schema der Datenübertragung der einzelnen Komponenten der Sicherheitsschalteranordnung 1 gemäß Figur 1 dargestellt, wobei der Übersichtlichkeit halber nur eine der Ausgangsstufen 3, 3' dargestellt ist.

In den Ausgangsstufen 3, 3' sind als Sollwerte mehrere Codes abgespeichert, die unterschiedliche Schaltsignale für das nachgeordnete Arbeitsgerät 2 kodieren. Die Codes bestehen im vorliegenden Fall jeweils aus einer Folge von acht Ziffern. Die Codes sind derart aufgebaut, dass ein erster Code eine Primärfolge von acht Ziffern bildet. Die restlichen Codes bilden Sekundärfolgen, die durch Abwandlungen der Reihenfolge der Ziffern der Primärfolge von dieser abgeleitet sind.

Im vorliegenden Ausführungsbeispiel ist das Arbeitsgerät 2 von einem Motor gebildet. Dementsprechend kodieren die Codes folgende Schaltsignale für den Motor:

| | |
|---|---|
| Primärfolge | Motor ein (Normalbetrieb) |
| | |
| 1. Sekundärfolge | Motor ein (bei reduzierter Geschwindigkeit) |
| | |
| restliche Sekundärfolgen | Motor aus |

Vor der Inbetriebnahme der Sicherheitsschalteranordnung 1 erfolgt eine Zuordnung der Ausgangsstufen 3, 3' zu den gewünschten Ausgängen des Sicherheitsmonitors 9. Dann werden die für die verschiedenen Aufgaben verwendeten Codes zwischen den Kommunikationspartnern vereinbart.

Vor der Inbetriebnahme wird dabei den Ausgangsstufen 3, 3' bekannt gemacht, unter welcher Adresse der Sicherheitsmonitor 9 den jeweiligen Code übertragen wird.

Die Codes umfassen im vorliegenden Fall jeweils acht Ziffern. Jeder zwischen einem Master 4 und einem Slave über die Busleitungen 6 übertragene Aufruf weist neben der Adresse ein Nutzdatenfeld von 4 Bit auf, in welchem der Code übertragen wird. Daher muss der achtstellige Code in einzelne Datenstränge von 4 Bit aufgeteilt werden und sukzessiv in mehreren Aufrufen über das Bussystem gesendet werden. Dementsprechend besteht der SR2-Aufruf aus mehreren einzelnen Aufrufen. Der Übersichtlichkeit halber wird im Folgenden eine derartige Serie von Aufrufen wie der SR2-Aufruf verkürzt als einzelner Aufruf dargestellt.

Während der auf den Einlernvorgang folgenden Betriebsphase des Bussystems wird die Ausgangsstufe 3 gemäß dem in Figur 2 dargestellten Schema angesteuert.

Der Master 4 sendet an den Sicherheitsmonitor 9 einen ersten Master-Request-Aufruf MR1. Da die sicherheitsrelevanten Informationen bildenden Codes im Sicherheitsmonitor 9 hinterlegt sind, enthält dieser Aufruf MR1 noch keinen Code für die Ausgangsstufen 3, 3'. Der Aufruf MR1 wird von dem Sicherheitsmonitor 9 beantwortet. Dabei enthält die Antwort SR1 einen Code zur Ansteuerung der Ausgangsstufe 3. Der Aufruf MR1 und die Antwort SR1 werden von der Ausgangsstufe 3 mitgehört, wodurch der Code in die Ausgangsstufe 3 eingelesen wird.

Bei der Anordnung gemäß Figur 1 sind mehrere identische Ausgangsstufen 3, 3' vorgesehen. In diesem Fall wird die Antwort SR1 von allen Ausgangsstufen 3, 3' mitgehört.

Der über die Antwort SR1 eingelesene Code wird in der Ausgangsstufe 3 mit den abgespeicherten Sollwerte Codes verglichen. Bei Übereinstimmung des eingelesenen Codes mit einem der abgespeicherten Codes wird ein positives Kontrollergebnis generiert. Ansonsten wird ein negatives Kontrollergebnis generiert.

Auf den Master-Request-Aufruf MR1 folgt nun ein zweiter Master-Request-Aufruf MR2 an die Ausgangsstufe 3. Die Antwort SR2 hierauf enthält das Kontrollergebnis, wobei die Antwort zum Sicherheitsmonitor 9 mitgehört wird.

Der Sicherheitsmonitor 9 überprüft dadurch fortlaufend die Kontrollergebnisse der Slaves. Stellt dabei der Sicherheitsmonitor 9 ein Abweichen wenigstens eines Kontrollergebnisses von einem vorgegebenen Sollverhalten fest, leitet der Sicherheitsmonitor 9 vordefinierte Maßnahmen ein.

Deaktiviert beispielsweise eine Ausgangsstufe 3 aufgrund einer Störung ein Arbeitsgerät 2, so wird diese Störung im Sicherheitsmonitor 9 dann erkannt, wenn aufgrund der Störung das positive Kontrollsignal der Ausgangsstufe 3 ausbleibt. In der Ausgangsstufe 3 ist vorzugsweise eine Wiederanlaufsperre integriert, die eine neuerliche Aktivierung des Arbeitsgerätes 2 verhindert. Die Ausgangsstufe 3 sorgt damit dafür, dass das Arbeitsgerät 2 im sicheren Zustand verbleibt. Damit arbeitet das Gesamtsystem aller Ausgangsstufen 3 nicht entsprechend der Sollwertvorgaben, die im Sicherheitsmonitor 9 hinterlegt sind. Der Sicherheitsmonitor 9 erkennt dies anhand des ausbleibenden positiven Kontrollergebnisses der entsprechenden Ausgangsstufe 3. Prinzipiell kann die Reaktion des Sicherheitsmonitors 9 darin bestehen, unmittelbar die Aussendung der Codes an die Ausgangsstufen 3 zu beenden, um dadurch sämtliche Arbeitsgeräte 2 zu deaktivieren. Dies entspricht einem globalen Not-Stopp für das Gesamtsystem.

Alternativ kann über den Sicherheitsmonitor 9 die Aktivierung der noch nicht deaktivierten Arbeitsgeräte 2 aufrechterhalten werden, bis beispielsweise über den Master 4 bzw. eine an diesen angeschlossene Steuerung die Arbeitsgeräte 2, kontrolliert abgebremst bzw. in eine Ruheposition gebracht werden.

Nach der Deaktivierung sämtlicher Arbeitsgeräte 2 werden die Wiederanlaufsperren aller Ausgangsstufen 3 durch einen regulären Neustart aufgehoben.

Prinzipiell kann die Reaktion des Sicherheitsmonitors 9 auf ein Ausbleiben des positiven Kontrollergebnisses der betreffenden Ausgangsstufe 3 so ausgebildet sein, dass deren Wiederanlaufsperre wieder aufgehoben wird, ohne die restlichen Arbeitsgeräte 2 zu deaktivieren.

Allgemein kann durch die Rückmeldung SR2 auf einen mit dem Aufruf SR1 eingelesenen Code die Funktionsfähigkeit der Ausgangsstufen 3 zyklisch überwacht werden.

Die Schaltsignale, die auf diese Weise an die Ausgangsstufen 3, 3' eingegeben werden, stellen sicherheitsrelevante Signale dar, anhand derer der Motor im Normalbetrieb oder im reduzierten Betrieb eingeschaltet oder ausgeschaltet wird. Nicht sicherheitsrelevante Signale wie zum Beispiel die Vorgabe der genauen Motorgeschwindigkeit erfolgen über die SPS-Steuerung 5 des Bussystems gemäß Figur 1 und können zweckmäßig mit den MR2-Aufrufen übertragen werden. Damit ergibt sich das Ausgangssignal einer Ausgangsstufe 3 als Kombination eines im Sicherheitsmonitor 9 generierten Freigabesignals, welches vom Schaltsignal gebildet ist, und eines den Betrieb des Arbeitsgerätes 2 steuernden Steuersignals von der SPS-Steuerung 5.

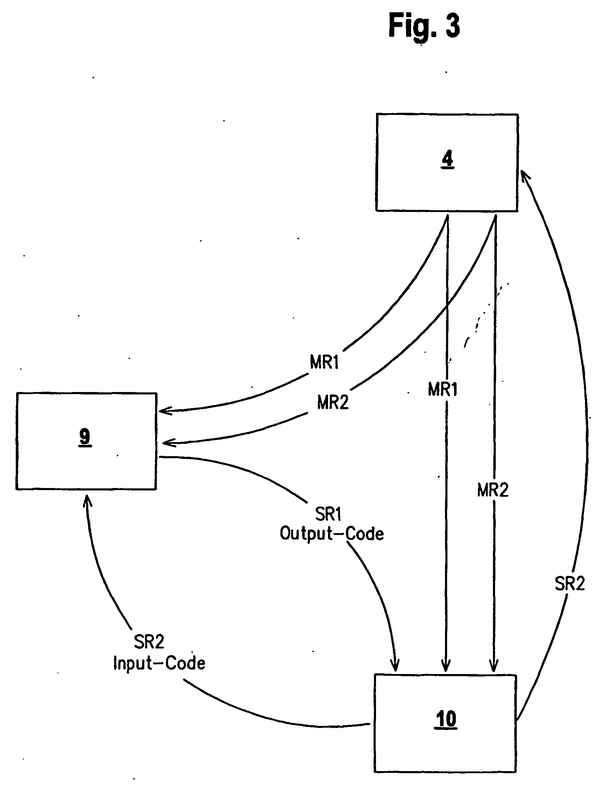

Figur 3 zeigt eine Modifikation der Anordnung gemäß Figur 2. Im Unterschied zur Anordnung gemäß Figur 2 ist als Slave keine Ausgangsstufe 3 sondern eine Ein-/Ausgangsstufe 10 vorgesehen.

Eine derartige Ein-/Ausgangsstufe 10 kann zum Beispiel von einem Lichtgitter gebildet sein. Das Lichtgitter weist mehrere Lichtschranken auf, deren Lichtstrahlen Strahlachsen bilden. Die Strahlachsen definieren einen in einer Ebene liegenden Überwachungsbereich innerhalb dessen Objekte erfassbar sind. Mit einem derartigen Lichtgitter kann ein Gefahrenbereich an einem Arbeitsgerät 2, beispielsweise einer Abkantpresse, überwacht werden. Je nach dem ob ein Objekt im Überwachungsbereich erkannt wird oder nicht, wird ein entsprechendes Objektfeststellungssignal im Lichtgitter generiert. Dieses bildet das Ausgangssignal, welches zur Generierung des Schaltsignals für das Arbeitsgerät 2 dient. Dabei wird das Arbeitsgerät 2 nur dann aktiviert, wenn sich kein Objekt im Überwachungsbereich befindet. Ansonsten wird das Arbeitsgerät 2 deaktiviert.

Je nach Anordnung des Lichtgitters und Ausbildung des Gefahrenbereichs können von einzelnen Strahlachsen des Lichtgitters auch nicht sicherheitsrelevante Bereiche erfasst werden. Eine Generierung eines Objektfeststellungssignals "Objekt erkannt" in diesem Bereich würde zu einem unnötigen Abschalten des Lichtgitters führen. Daher können als Eingangssignale sogenannte Blanking-Zonen in das Lichtgitter eingegeben werden, mit welchen die nicht sicherheitskritische Bereiche erfassenden Strahlachsen des Lichtgitters ausgeblendet werden, so dass bei einem Objekteingriff in eine Blanking-Zone kein entsprechendes Objektfeststellungssignal generiert wird.

In diesem Fall sind für die Slaves bildenden Ein-/Ausgangsstufen 10 nicht nur Codes für Ausgangssignale sondern, auch Codes für Eingangssignale vorgegeben. Die von der Ein-/Ausgangsstufe 10 zum Sicherheitsmonitor 9 gesendeten Codes kodieren im vorliegenden Fall die Schaltsignale "Arbeitsgerät aktiviert" oder "Arbeitsgerät deaktiviert". Die vom Sicherheitsmonitor 9 zu einer Ein-/Ausgangsstufe 10 gesendeten Codes kodieren die unterschiedlichen Blanking-Zonen.

Bei dieser Konfiguration kann ein Arbeitsgerät 2 unmittelbar über die Ein-/Ausgangsstufe 10 oder über den Sicherheitsmonitor 9, der gegebenenfalls eine weitere Ausgangsstufe 3 oder eine Ein-/Ausgangsstufe 10 ansteuert, aktiviert und deaktiviert werden.

In einer weiteren Ausführungsform kann die Ein-/Ausgangsstufe 10 von einem Flächendistanzsensor gebildet sein, mittels dessen Objekte in einer Ebene geortet werden können. Als Parameter sind in dem Flächendistanzsensor verschiedene Schutzfelder gespeichert. In dem Flächendistanzsensor wird applikationsspezifisch ein bestimmtes Schutzfeld ausgewählt. Dann wird mit dem Flächendistanzsensor erfasst, ob sich ein Objekt im Schutzfeld befindet oder nicht.

Das dabei generierte Objektfeststellungssignal bildet wiederum das Schaltsignal für ein Arbeitsgerät 2. Dabei wird das Arbeitsgerät 2 nur dann aktiviert, wenn sich kein Objekt im Schutzfeld befindet. Ansonsten wird das Arbeitsgerät 2 deaktiviert.

In diesem Fall kodieren die von der Ein-/Ausgangsstufe 10 zum Sicherheitsmonitor 9 gesendeten Codes die Schaltsignale Arbeitsgerät aktiviert" oder "Arbeitsgerät deaktiviert". Die vom Sicherheitsmonitor 9 zur Ein-/Ausgangsstufe 10 gesendeten Codes kodieren die unterschiedlichen Schutzfelder.

In Figur 3 ist das Schema der Datenübertragung zwischen dem Master 4, dem Sicherheitsmonitor 9 und dem als Ein-/Ausgangsstufe 10 ausgebildeten Slave dargestellt.

Die Vereinbarung der Codes und Adressen der einzelnen Busteilnehmer erfolgt analog zur Ausführungsform gemäß Figur 2 vor Inbetriebnahme des Bussystems.

Weiterhin erfolgt in Übereinstimmung mit der Ausführungsform gemäß Figur 2 die Ansteuerung der Ein-/Ausgangsstufe 10 über den Sicherheitsmonitor 9 mit dem SR1 Aufruf als Antwort auf den Master-Request-Aufruf MR1, worauf der Slave als Antwort auf den zweiten Master-Request-Aufruf MR2 mit der Antwort SR2 das Kontrollergebnis ermittelt.

Auf diese Weise werden die Schaltsignale der Ein-/Ausgangsstufe 10 zur Aktivierung oder Deaktivierung des Arbeitsgerätes 2 vorgegeben. Weiterhin können auf diese Weise die Ein-/Ausgangsstufe 10 durch Vorgabe spezifischer Blanking-Zonen bzw. spezifischen Schutzfeldeinstellungen vorgegeben werden.

In Erweiterung zur Ausführungsform gemäß Figur 2 werden bei der Konfiguration gemäß Figur 3 über den Aufruf SR2 Input Code Eingangssignale aus der Ein-/Ausgangsstufe 10 eingelesen. Hierzu gehören die aktuell ermittelten Objektfeststellungssignale sowie der aktuelle Status der eingestellten Blanking-Zone bzw. des aktuell eingestellten Schutzfeldes.

In Abhängigkeit dieser Eingangsgrößen einer Ein-/Ausgangsstufe 10 können im Sicherheitsmonitor 9 Ausgangssignale generiert werden, um als Parameter beispielsweise die Blanking-Zonen oder Schutzfelder anderer Ein/Ausgangsstufen 10 in vorgegebener Weise zu ändern.

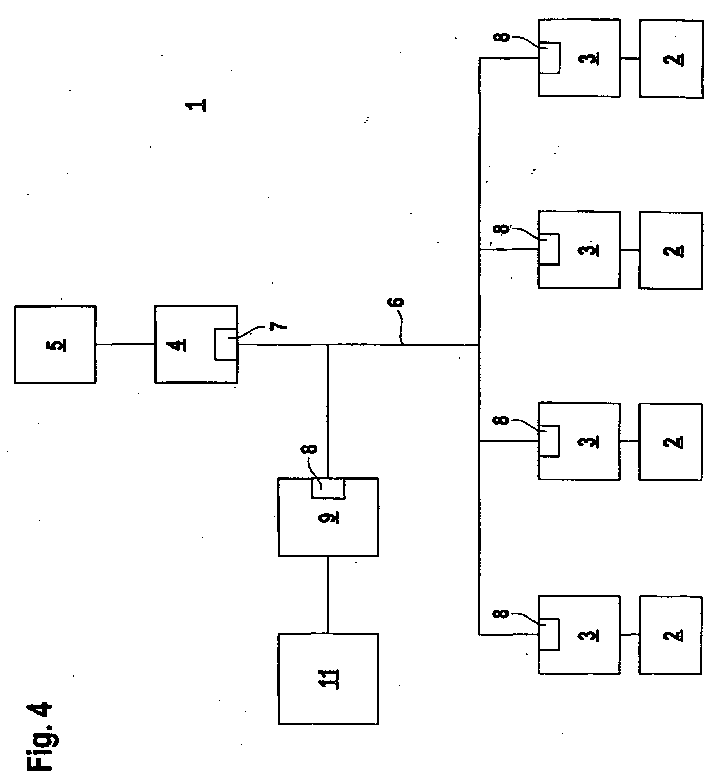

Figur 4 zeigt die Sicherheitsschalteranordnung 1 mit einer Beschaltung, mittels derer das Bussystem vor dessen Inbetriebnahme konfigurierbar ist. Hierzu ist an den Sicherheitsmonitor 9 eine Bedieneinheit 11 angeschlossen, die von einer Rechnereinheit, insbesondere von einem Personalcomputer gebildet ist. Ansonsten ist die Schaltungsanordnung gemäß Figur 4 identisch mit der Anordnung gemäß Figur 1.

Mittels der Bedieneinheit 11 wird eine Konfigurationsphase initialisiert, innerhalb derer das Bussystem oder wenigstens Komponenten hiervon konfiguriert werden. Die Konfigurierung wird dabei komplett vom Sicherheitsmonitor 9 gesteuert und kontrolliert, wobei zur Durchführung der Konfigurierung Eingabedaten über die Bedieneinheit 11 in den Sicherheitsmonitor 9 eingegeben werden.

Gemäß einer ersten Variante erfolgt die Konfigurierung derart, dass während der Konfigurationsphase der Master 4 des Bussystems aktiviert bleibt. Der Master 4 fragt dann die Busteilnehmer, nämlich die angeschlossenen Slaves und den Sicherheitsmonitor 9 unter den diesen Komponenten zugewiesenen Adressen zyklisch ab. Wesentlich hierbei ist, dass der Master 4 nur diese Masterfunktionen übernimmt, sämtliche sicherheitsrelevanten Funktionen zur Konfigurierung des Bussystems werden jedoch vom Sicherheitsmonitor 9 übernommen.

Zur Konfigurierung des Bussystems werden gerätespezifische Parameter von den einzelnen Slaves zu dem Sicherheitsmonitor 9 übertragen. Die Datenübertragung erfolgt dabei entsprechend den Ausführungsbeispielen gemäß Figuren 2 und 3.

Als gerätespezifische Parameter werden insbesondere den jeweiligen Gerätetyp eines Slaves definierende Codes, die in den betreffenden Slaves abgespeichert sind, von dem jeweiligen Slave an den Sicherheitsmonitor 9 übertragen.

Weiterhin werden als gerätespezifische Parameter die einzelnen Slaves kennzeichnende Geräteversionen in Form von Codes in den Sicherheitsmonitor 9 eingelesen. Vorzugsweise sind dabei in einem Slave nicht nur dessen aktuelle Geräteversion, sondern auch die früheren Geräteversionen hinterlegt. Dazu wird während der Konfigurationsphase der aktuelle Versionsstatus mit der Historie früherer Versionen in den Sicherheitsmonitor 9 eingelesen.

Weiterhin werden während der Konfigurationsphase zur Konfigurierung der Slaves vom Sicherheitsmonitor 9 applikationsspezifische Parameter in die einzelnen Slaves eingegeben. Auch hierbei erfolgt die Datenübertragung analog zu den Ausführungsformen gemäß den Figuren 2 und 3.

Beispielsweise kontrolliert der Sicherheitsmonitor 9 anhand der von den Slaves eingelesenen Geräteversionen, welche dieser Geräteversionen untereinander kompatibel sind. In Abhängigkeit dieser Überprüfung legt der Sicherheitsmonitor 9 fest, unter welcher Geräteversion die einzelnen Slaves jeweils während des Betriebs des Bussystems für eine bestimmte Applikation angesprochen werden. Liegt beispielsweise für einen Slave eine neue Geräteversion vor, die bei den restlichen Slaves noch nicht vorliegt und nicht kompatibel mit den Geräteversionen dieser restlichen Slaves ist, so wird im Sicherheitsmonitor 9 vereinbart, dass der eine Slave nicht unter seiner aktuellen Geräteversion aufgerufen werden soll. Vielmehr wird vereinbart, dass der Slave während des Betriebs des Bussystems unter einer früheren Geräteversion angesprochen werden soll, die kompatibel mit den Geräteversionen der restlichen Slaves ist.

Ein weiteres Beispiel für die Konfigurierung von Slaves besteht darin, dass über den Sicherheitsmonitor 9 vorgebbar ist, ob eine Wiederanlaufsperre in einem Slave aktiviert oder deaktiviert ist.

Für den Fall, dass die Slaves von Ein-/Ausgangsstufen 10, insbesondere von Lichtgittern oder Flächendistanzsensoren gebildet sind, können für derartige Sensoren optische Parameter während der Konfigurationsphase vorgegeben werden.

Bei Lichtgittern können beispielsweise die geometrischen Daten der Blanking-zonen als optische Parameter vorgegeben werden.

Bei Flächendistanzsensoren können beispielsweise die geometrischen Daten von Schutzfeldern als Parameter vorgegeben werden.

Gemäß einer vorteilhaften Variante können derartige Schutzfelder, die typischerweise während eines Einlernvorganges nach vorgegebenen Regeln definiert und im jeweiligen Flächendistanzsensor abgespeichert werden, auch während einer Konfigurationsphase als Geräteparameter in den Sicherheitsmonitor 9 eingelesen und dort abgespeichert werden. Wird während einer weiteren Konfigurationsphase der betreffende Flächendistanzsensoren gegen ein neues Gerät ausgetauscht, so kann das im Sicherheitsmonitor 9 gespeicherte Schutzfeld direkt in das neue Gerät eingelesen werden.

Zum Abschluss der Konfigurationsphase wird in dem Sicherheitsmonitor 9 eine komplette Liste mit sämtlichen die Konfigurationsdaten bildenden Parametern aller Slaves erstellt. Diese Liste enthält somit alle sicherheitsrelevanten, applikationsspezifischen Daten, die zentral vom Sicherheitsmonitor 9 abrufbar sind.

Die Konfigurationsphase wird vorzugsweise über einen Eingabebefehl an der Bedieneinheit 11 beendet, worauf der Betrieb des Bussystems gestartet wird.

In einer alternativen Ausführungsform wird der Master 4 während der Konfigurationsphase deaktiviert. In diesem Fall werden die Masterfunktionen von dem Sicherheitsmonitor 9 übernommen. Der Master 4 wird zur Deaktivierung von dem Bussystem abgetrennt oder mittels eines Steuerbefehls in einen off line Betrieb gesetzt. Der Sicherheitsmonitor 9 registriert die Deaktivierung des Masters 4 und übernimmt daraufhin selbsttätig die Masterfunktionen. Sobald der Master 4 wieder aktiviert ist, übernimmt dieser vom Sicherheitsmonitor 9 wieder die Masterfunktionen.

Die Konfigurierung des Bussystems erfolgt dabei analog zu der Konfigurierung bei aktiviertem Master 4.

In einer weiteren Ausführungsform kann die Konfigurationsphase auch während des Betriebs des Bussystems eingeleitet werden um beispielsweise einen Slave auszutauschen. In diesem Fall wird zur Initialisierung der Konfigurationsphase ein nicht dargestellter Schalter oder dergleichen am Sicherheitsmonitor 9 betätigt.

In einem ersten Schritt wird während der Konfigurationsphase dem neuen Slave eine Adresse zugewiesen. Daraufhin wird der Slave analog zu den vorigen Ausführungsformen konfiguriert.

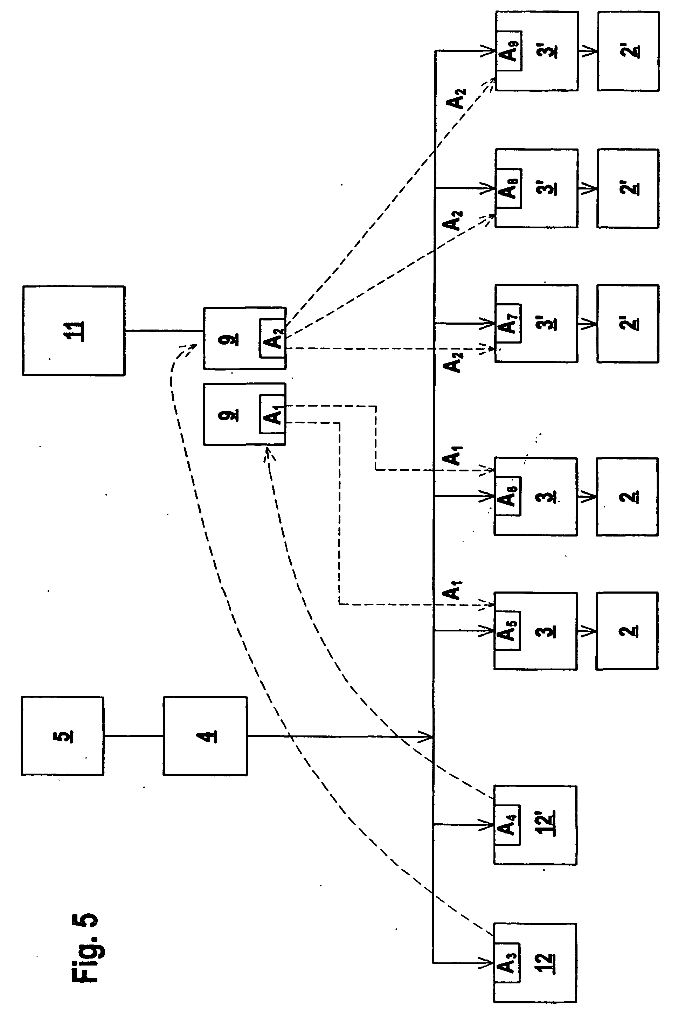

Figur 5 zeigt die Funktionsweise einer zweiten Ausführungsform der erfindungsgemäßen Sicherheitsschalteranordnung 1. Die Sicherheitsschalteranordnung 1 ist wiederum von einem Master-Slave-Bussystem gebildet, welches von einem Master 4 gesteuert werden. An den Master 4 ist wiederum eine SPS-Steuerung 5 angeschlossen. Zudem sind zwei redundante Sicherheitsmonitore 9 vorgesehen, wobei dem ersten Sicherheitsmonitor 9 die Adresse A₁ und dem zweiten Sicherheitsmonitor 9 die Adresse A₂ zugewiesen ist. Prinzipiell kann auch ein Sicherheitsmonitor 9 mit zwei Adressen A₁, A₂ eingesetzt werden.

Weiterhin sind als Slaves mehrere Ausgangsstufen 3, 3' vorgesehen, die analog zur Ausführungsform gemäß Figur 1 von Relais gebildet sind, die den Betrieb von Arbeitsgeräten 2, 2' bildenden Motoren steuern. Die Motoren dienen beispielsweise zum Antrieb von Komponenten einer Förderstrecke.

Weiterhin sind bei der Anordnung gemäß Figur 5 als Slaves zwei Eingangsstufen 12, 12' vorgesehen. Die Eingangsstufen 12, 12' sind im vorliegenden Fall als Not-Aus-Schalter ausgebildet. Allgemein sind die Eingangsstufen 12, 12' von Sensoren gebildet.

Die Ausgangsstufen 3, 3' sowie die nachgeordneten Arbeitsgeräte 2, 2' sind in zwei Gruppen unterteilt.

Während des Betriebs arbeitet die Sicherheitsschalteranordnung 1 gemäß Figur 5 wie folgt:

Die erste Gruppe von Ausgangsstufen 3 und Arbeitsgeräten 2 wird über SR1 Aufrufe gemäß den Figuren 2 bzw. 3 unter der Adresse A₁ des ersten Sicherheitsmonitors 9 angesteuert, d.h. die Ausgangsstufen 3, hören nur die unter der Adresse A₁ ausgesendeten Aufrufe SR1 des ersten Sicherheitsmonitors 9 mit, wobei die Kontrollergebnisse der Ausgangsstufen 3, wieder über SR2 Aufrufe rückgemeldet werden.

Die zweite Gruppe von Ausgangsstufen 3' und Arbeitsgeräten 2' wird über SR1 Aufrufe gemäß den Figuren 2 und 3 unter der Adresse A₂ des zweiten Sicherheitsmonitors 9 angesteuert, d.h. die Ausgangsstufen 3' hören nur die unter der Adresse A₂ ausgesendeten Aufrufe SR1 des zweiten Sicherheitsmonitors 9 mit, wobei die Kontrollergebnisse der Ausgangsstufen 3' wieder über SR2 Aufrufe rückgemeldet werden.

Die Ansteuerung der ersten Gruppe der Ausgangsstufen 3 erfolgt dabei in Abhängigkeit der von der ersten Eingangsstufe 12 generierten Eingangssignale. Dabei erfolgt eine Freigabe des Betriebs der Arbeitsgeräte 2 über die Ausgangsstufen 3 nur dann, wenn der die Eingangsstufe 12 bildende Not-Aus-Schalter nicht betätigt ist.

Ebenso erfolgt die Ansteuerung der zweiten Gruppe der Ausgangsstufen 3' in Abhängigkeit der von der zweiten Eingangsstufe 12' generierten Eingangssignale. Dabei erfolgt eine Freigabe des Betriebs der Arbeitsgeräte 2' über die Ausgangsstufen 3' nur dann, wenn der die Eingangsstufe 12' bildende Not-Aus-Schalter nicht betätigt ist.

Ansonsten erfolgt der Betrieb der Sicherheitsschalteranordnung 1 gemäß Figur 4 analog zur Ausführungsform gemäß Figur 1.

Zur Konfigurierung des Bussystems wird wie in Figur 5 dargestellt ein Personalcomputer als Bedieneinheit an einen der Sicherheitsmonitore 9, im vorliegenden Fall an den zweiten Sicherheitsmonitor 9 mit der Adresse A_{2,} angeschlossen.

Zur Durchführung der Konfigurierung wird im vorliegenden Fall der Master 4 deaktiviert. Bei der Deaktivierung des Masters 4 übernimmt der Sicherheitsmonitor 9, an welchem die Bedieneinheit 11 angeschlossen ist, selbsttätig die Masterfunktionen.

Die Konfiguration kann in diesem Fall derart erfolgen, dass jeder Sicherheitsmonitor 9 unabhängig von dem jeweils anderen Sicherheitsmonitor 9 das ihm zugeordnete Subsystem konfiguriert. Diese Variante ist insbesondere bei unabhängig voneinander arbeitenden Subsystemen sinnvoll. Alternativ kann die Konfigurierung des Gesamtsystems von einem Sicherheitsmonitor 9 allein durchgeführt werden. Vorteilhaft übernimmt derselbe Sicherheitsmonitor 9 die Konfigurierung, welcher auch die Masterfunktionen übernommen hat. In jedem Fall ist in jedem Sicherheitsmonitor 9 als Basisinformation abgespeichert, welcher Sicherheitsmonitor 9 bei einer Mehrfachanordnung von Sicherheitsmonitoren 9 die Konfigurierung des Bussystems durchführen soll.

### Bezugszeichenliste

- (1): Sicherheitsschalteranordnung
- (2, 2'): Arbeitsgerät
- (3, 3'): Ausgangsstufe
- (4): Master
- (5): SPS-Steuerung
- (6): Busleitung
- (7): Analogschaltung
- (8): Schnittstellenbaustein
- (9): Sicherheitsmonitor
- (10): Ein-/Ausgangsstufe
- (11): Bedieneinheit
- (12, 12'): Eingangsstufe

## Patentansprüche

1. Sicherheitsschalteranordnung (1) mit einer vorgegebenen Anzahl von Schaltsignalen generierenden Ausgangsstufen (3), wobei in Abhängigkeit der Schaltsignale an die Ausgangsstufen (3) angeschlossene Arbeitsgeräte (2) aktivierbar oder deaktivierbar sind, und wobei die Ausgangsstufen (3) Slaves eines nach dem Master-Slave-Prinzip arbeitenden Bussystems bilden, welchem wenigstens ein Sicherheitsmonitor (9) zum Abhören der über das Bussystem übertragenen Signale zugeordnet ist, **dadurch gekennzeichnet, dass** während des Betriebs des Bussystems die Slaves in Abhängigkeit von im Sicherheitsmonitor (9) hinterlegten Codes steuerbar sind, wobei auf einen vom Master (4) an dem Sicherheitsmonitor (9) gesendeten Master-Request-Aufruf MR1 ein Code als Antwort SR1 von dem Sicherheitsmonitor (9) an den Master (4) gesendet und von den Slaves mitgehört und dabei in diese eingelesen wird, und dass in den jeweiligen Slaves der empfangene Code kontrolliert wird, wobei das Ergebnis der Kontrolle als Antwort SR2 auf einen zweiten Master-Request-Aufruf MR2 des Masters (4) an diesen zurückgesendet und vom Sicherheitsmonitor (9) mitgehört wird, und dass mittels des Sicherheitsmonitors (9) während einer Konfigurationsphase Komponenten als Slaves des Bussystems konfigurierbar und/oder abschließbar sind.

2. Sicherheitsschalteranordnung nach Anspruche 1, **dadurch gekennzeichnet, dass** die Konfigurationsphase mittels einer dem Sicherheitsmonitor (9) zugeordneten Bedieneinheit (11) initialisierbar ist.

3. Sicherheitsschalteranordnung nach Anspruch 2, **dadurch gekennzeichnet, dass** die Bedieneinheit (11) vom einem am Sicherheitsmonitor (9) angeordneten Schalter gebildet ist, welcher während des Betriebs des Bussystems zur Initialisierung der Konfigurationsphase betätigbar ist.

4. Sicherheitsschalteranordnung nach Anspruch 3, **dadurch gekennzeichnet, dass** während der mittels des Schalters initialisierten Konfigurationsphase ein Slave des Bussystems austauschbar ist.

5. Sicherheitsschalteranordnung nach Anspruch 4, **dadurch gekennzeichnet, dass** dem neu angeschlossenen Slave eine Adresse zugewiesen wird.

6. Sicherheitsschalteranordnung nach einem der Ansprüche 5 oder 6, **dadurch gekennzeichnet, dass** der neu angeschlossene Slave in der Konfigurationsphase konfigurierbar ist.

7. Sicherheitsschalteranordnung nach einem der Ansprüche 2 bis 6, **dadurch gekennzeichnet, dass** die Bedieneinheit von einer an den Sicherheitsmonitor (9) anschließbaren Rechnereinheit gebildet ist, mittels derer die Konfigurationsphase vor Inbetriebnahme des Bussystems initialisierbar ist.

8. Sicherheitsschalteranordnung nach Anspruch 7, **dadurch gekennzeichnet, dass** über die Rechnereinheit Eingabedaten zur Durchführung der Konfigurierung von Komponenten des Bussystems in den Sicherheitsmonitor (9) eingebbar sind.

9. Sicherheitsschalteranordnung nach einem der Ansprüche 7 oder 8, **dadurch gekennzeichnet, dass** die Rechnereinheit von einem Personalcomputer gebildet ist.

10. Sicherheitsschalteranordnung nach einem der Ansprüche 1 bis 9, **dadurch gekennzeichnet, dass** während der Konfigurationsphase über den Sicherheitsmonitor (9) applikationsspezifische Parameter für die Slaves vorgegeben werden.

11. Sicherheitsschalteranordnung nach einem der Ansprüche 1 bis 10, **dadurch gekennzeichnet, dass** während der Konfigurationsphase gerätespezifische Parameter von den Slaves in den Sicherheitsmonitor (9) eingegeben werden.

12. Sicherheitsschalteranordnung nach Anspruch 11, **dadurch gekennzeichnet, dass** von den Slaves deren Gerätetyp definierende Codes in den Sicherheitsmonitor (9) eingelesen werden.

13. Sicherheitsschalteranordnung nach einem der Ansprüche 11 oder 12, **dadurch gekennzeichnet, dass** von den Slaves deren Geräteversionen kennzeichnende Codes in den Sicherheitsmonitor (9) eingelesen werden.

14. Sicherheitsschalteranordnung nach einem der Ansprüche 10 bis 13, **dadurch gekennzeichnet, dass** vor Abschluss der Konfigurationsphase im Sicherheitsmonitor (9) eine Liste mit sämtlichen von den Parametern gebildeten Konfigurationsdaten erstellt und abgespeichert wird.

15. Sicherheitsschalteranordnung nach einem der Ansprüche 1 bis 14, **dadurch gekennzeichnet, dass** während der Konfigurationsphase der Master (4) aktiviert ist.

16. Sicherheitsschalteranordnung nach Anspruch 15, **dadurch gekennzeichnet, dass** die Datenübertragung zwischen den Komponenten des Bussystems während der Konfigurationsphase der Datenübertragung während des Betriebs des Bussystems entspricht.

17. Sicherheitsschalteranordnung nach einem der Ansprüche 1 - 16, **dadurch gekennzeichnet, dass** während der Konfigurationsphase der Master (4) deaktiviert ist, und dass der Sicherheitsmonitor (9) die Masterfunktionen übernimmt.

18. Sicherheitsschalteranordnung nach Anspruch 17, **dadurch gekennzeichnet, dass** der Master (4) zur Deaktivierung vom Bussystem abgetrennt wird oder mittels eines Steuerbefehls in einen Offline-Betrieb gesetzt wird.

19. Sicherheitsschalteranordnung nach einem der Ansprüche 17 oder 18, **dadurch gekennzeichnet, dass** das Bussystems mehrere Sicherheitsmonitore (9) zur Ansteuerung verschiedener Gruppen von Ausgangsstufen (3, 3') aufweist, und dass der mittels der Bedieneinheit (11) aktivierte Sicherheitsmonitor (9) während der Konfigurationsphase die Masterfunktionen übernimmt.

20. Sicherheitsschalteranordnung nach einem der Ansprüche 1 bis 19, **dadurch gekennzeichnet, dass** an das Bussystem Slaves bildendende Eingangsstufen (12, 12') angeschlossen sind, wobei die von den Eingangsstufen (12, 12') generierten Eingangssignale in den Sicherheitsmonitor (9) eingebbar sind.

21. Sicherheitsschalteranordnung nach einem der Ansprüche 1 bis 20, **dadurch gekennzeichnet, dass** an das Bussystem Slaves bildende Ein/Ausgangsstufen (10) angeschlossen sind, wobei die von den Ein/Ausgangsstufen (10) generierten Eingangssignale in den Sicherheitsmonitor (9) eingebbar sind.

22. Sicherheitsschalteranordnung nach einem der Ansprüche 20 oder 21, **dadurch gekennzeichnet, dass** die Eingangssignale in Form von Codes in den Sicherheitsmonitor (9) eingebbar sind.

23. Sicherheitsschalteranordnung nach einem der Ansprüche 20 bis 22, **dadurch gekennzeichnet, dass** der Sicherheitsmonitor (9) Ausgangsstufen (3, 3') in Abhängigkeit von Eingangssignalen von Eingangsstufen (12, 12') und/oder von Ein/Ausgangsstufen (10) ansteuert.

24. Sicherheitsschalteranordnung nach einem der Ansprüche 1 bis 23, **dadurch gekennzeichnet, dass** der Sicherheitsmonitor (9) einen redundanten Aufbau aufweist.

25. Sicherheitsschalteranordnung nach Anspruch 24, **dadurch gekennzeichnet, dass** der Sicherheitsmonitor (9) von einer zweikanaligen Mikroprozessoreinheit gebildet ist.

26. Sicherheitsschalteranordnung nach einem der Ansprüche 1 bis 25, **dadurch gekennzeichnet, dass** die Slaves einen redundanten Aufbau aufweisen.

27. Sicherheitsschalteranordnung nach Anspruch 26, **dadurch gekennzeichnet, dass** als Ausgangsstufen (3, 3') Aktoren vorgesehen sind.

28. Sicherheitsschalteranordnung nach Anspruch 27, **dadurch gekennzeichnet, dass** die Aktoren als Relais ausgebildet sind.

29. Sicherheitsschalteranordnung nach einem der Ansprüche 27 oder 28, **dadurch gekennzeichnet, dass** in den Ausgangsstufen (3, 3') jeweils eine Wiederanlaufsperre integriert ist.

30. Sicherheitsschalteranordnung nach einem der Ansprüche 27 bis 29, **dadurch gekennzeichnet, dass** das Ausgangssignal einer Ausgangsstufe (3, 3') von einer Kombination eines im Sicherheitsmonitor (9) generierten Freigabesignals und eines den Betrieb eines Arbeitsgeräts (2, 2') definierenden Steuersignals einer an den Master (4) angeschlossenen Steuerung gebildet ist.

31. Sicherheitsschalteranordnung nach einem der Ansprüche 29 bis 30, **dadurch gekennzeichnet, dass** als Eingangsstufen (12, 12') Sensoren vorgesehen sind.

32. Sicherheitsschalteranordnung nach Anspruch 31, **dadurch gekennzeichnet, dass** die Sensoren von Not-Aus-Schaltern gebildet sind.

33. Sicherheitsschalteranordnung nach einem der Ansprüche 25 bis 32, **dadurch gekennzeichnet, dass** als Ein-/Ausgangsstufen (10) Sensoren vorgesehen sind.

34. Sicherheitsschalteranordnung nach Anspruch 33, **dadurch gekennzeichnet, dass** die Sensoren von Lichtgittern gebildet sind.

35. Sicherheitsschalteranordnung nach Anspruch 34, **dadurch gekennzeichnet, dass** die Sensoren von optischen Flächendistanzsensoren gebildet sind.

36. Sicherheitsschalteranordnung nach einem der Ansprüche 1 bis 35, **dadurch gekennzeichnet, dass** das Bussystem als Sensor-Aktor-Bussystem ausgebildet ist.

## Claims

1. Safety switch arrangement (1) with output stages (3) generating a predetermined number of switching signals, wherein operating apparatus (2) connected with the output stages (3) are activatable or deactivatable in dependence on the switching signals and wherein the output stages (3) form slaves of a bus system, which operates according to the master/slave principle and with which is associated at least one safety monitor (9) for monitoring the signals transmitted by way of the bus system, **characterised in that** during operation of the bus system the slaves are controllable in dependence on codes filed in the safety monitor (9), wherein as response SR1 to a master request call MR1 transmitted from the master (4) to the safety monitor (9) a code is transmitted from the safety monitor (9) to the master (4) and monitored by the slaves and **in that** case read into these, and that the received code is checked in the respective slaves, wherein as response SR2 to a second master request call MR2 of the master (4) the result of the check is transmitted back to the master and monitored by the safety monitor (9) and that components can be configured and/or connected as slaves of the bus system by means of the safety monitor (9) during a configuration phase.

2. Safety switch arrangement according to claim 1, **characterised in that** the configuration phase can be initiated by means of an operating unit (11) associated with the safety monitor (9).

3. Safety switch arrangement according to claim 2, **characterised in that** the operating unit (11) is formed by a switch which is arranged at the safety monitor (9) and which is actuable, during operation of the bus system, for initialisation of the configuration phase.

4. Safety switch arrangement according to claim 3, **characterised in that** during the configuration phase initialised by means of the switch a slave of the bus system is exchangeable.

5. Safety switch arrangement according to claim 4, **characterised in that** an address is allocated to the newly connected slave.

6. Safety switch arrangement according to one of claims 5 and 6, **characterised in that** the newly connected slave can be configured in the configuration phase.

7. Safety switch arrangement according to one of claims 2 to 6, **characterised in that** the operating unit is formed by a computer unit which is connectible with the safety monitor (9) and by means of which the configuration phase can be initialised before placing the bus system in operation.

8. Safety switch arrangement according to claim 7, **characterised in that** input data for carrying out the configuring of components of the bus system can be input into the safety monitor (9) by way of the computer unit.

9. Safety switch arrangement according to one of claim 7 and 8, **characterised in that** the computer unit is formed by a personal computer.

10. Safety switch arrangement according to one of claims 1 to 9, **characterised in that** during the configuration phase application-specific parameters for the slaves are predetermined by way of the safety monitor (9).

11. Safety switch arrangement according to one of claims 1 to 10, **characterised in that** during the configuration phase apparatus-specific parameters are input into the safety monitor (9) by the slaves.

12. Safety switch arrangement according to claim 11, **characterised in that** codes defining the apparatus type of the slaves are read into the safety monitor (9) by the slaves.

13. Safety switch arrangement according to one of claims 11 and 12, **characterised in that** codes characterising the apparatus versions of the slaves are read into the safety monitor (9) by the slaves.

14. Safety switch arrangement according to one of claims 10 to 13, **characterised in that** before conclusion of the configuration phase a list with all configuration data formed by the parameters is created and stored in the safety monitor (9).

15. Safety switch arrangement according to one of claims 1 to 14, **characterised in that** the master (4) is activated during the configuration phase.

16. Safety switch arrangement according to claim 15, **characterised in that** the data transmission between the components of the bus system during the configuration phase corresponds with the data transmission during operation of the bus system.

17. Safety switch arrangement according to one of claims 1 to 16, **characterised in that** during the configuration phase the master (4) is deactivated and the safety monitor (9) takes over the master functions.

18. Safety switch arrangement according to claim 17, **characterised in that** the master (4) is, for deactivation, separated from the bus system or placed in an off-line operation by means of a control command.

19. Safety switch arrangement according to one of claims 17 and 18, **characterised in that** the bus system comprises several safety monitors (9) for controlling different groups of output stages (3, 3') and that the safety monitor (9) activated by means of the operating unit (11) takes over the master functions during the configuration phase.

20. Safety switch arrangement according to one of claims 1 to 19, **characterised in that** input stages (12, 12') forming slaves are connected with the bus system, wherein the input signals generated by the input stages (12, 12') can be input into the safety monitor (9).

21. Safety switch arrangement according to one of claims 1 to 20, **characterised in that** input/output stages (10) forming slaves are connected with the bus system, wherein the input signals generated by the input/output stages (10) can be input into the safety monitor (9).

22. Safety switch arrangement according to one of claims 20 and 21, **characterised in that** the input signals can be input in the form of codes into the safety monitor (9).

23. Safety switch arrangement according to one of claims 20 to 22, **characterised in that** the safety monitor (9) controls output stages (3, 3') in dependence on input signals of input stages (12, 12') and/or of input/output stages (10).

24. Safety switch arrangement according to one of claims 1 to 23, **characterised in that** the safety monitor (9) has a redundant form of construction.

25. Safety switch arrangement according to claim 24, **characterised in that** the safety monitor (9) is formed by a two-channel microprocessor unit.

26. Safety switch arrangement according to one of claims 1 to 25, **characterised in that** the slaves have a redundant mode of construction.

27. Safety switch arrangement according to claim 26, **characterised in that** actuators are provided as output stages (3, 3').

28. Safety switch arrangement according to claim 27, **characterised in that** the actuators are constructed as relays.

29. Safety switch arrangement according to one of claims 27 and 28, **characterised in that** a respective restart lock is integrated in each of the output stages (3, 3').

30. Safety switch arrangement according to one of claims 27 to 29, **characterised in that** the output signal of an output stage (3, 3') is formed by a combination of a release signal generated in the safety monitor (9) and a control signal, which defines the operation of an operating apparatus (2, 2'), of a control connected with the master (4).

31. Safety switch arrangement according to one of claims 29 and 30, **characterised in that** sensors are provided as input stages (12, 12').

32. Safety switch arrangement according to claim 31, **characterised in that** the sensors are formed by emergency 'off' switches.

33. Safety switch arrangement according to one of claims 25 to 32, **characterised in that** sensors are provided as input/output stages (10).

34. Safety switch arrangement according to claim 33, **characterised in that** the sensors are formed by light gratings.

35. Safety switch arrangement according to claim 34, **characterised in that** the sensors are formed by optical area distance sensors.

36. Safety switch arrangement according to one of claims 1 to 35, **characterised in that** the bus system is constructed as a sensor/actuator bus system.

## Revendications

1. Dispositif de commutation de sécurité (1) avec un nombre prédéfini d'étages de sortie (3) générant des signaux de commutation, des équipements de travail (2) connectés aux étages de sortie (3) étant activables ou désactivables en fonction des signaux de commutation et les étages de sortie (3) formant des esclaves d'un système de bus fonctionnant selon le principe maître-esclave auquel est associé au moins un moniteur de sécurité (9) pour écouter les signaux transmis via le système de bus, **caractérisé par le fait que**, pendant le fonctionnement du système de bus, les esclaves peuvent être commandés en fonction de codes enregistrés dans le moniteur de sécurité (9), que, sur un appel Master Request MR1 envoyé par le maître (4) au moniteur de sécurité (9), un code est envoyé comme réponse SR1 par le moniteur de sécurité (9) au maître (4), écouté par les esclaves et lu dans ceux-ci, et que le code reçu est contrôlé dans les différents esclaves, le résultat du contrôle étant renvoyé au maître (4) comme réponse SR2 à un deuxième appel Master Request MR2 du maître (4) et écouté par le moniteur de sécurité (9), et que pendant une phase de configuration des composants peuvent être configurés et/ou connectés en tant qu'esclaves du système de bus au moyen du moniteur de sécurité (9).

2. Dispositif de commutation de sécurité selon la revendication 1, **caractérisé par le fait que** la phase de configuration peut être initialisée au moyen d'une unité de commande (11) associée au moniteur de sécurité (9).

3. Dispositif de commutation de sécurité selon la revendication 2, **caractérisé par le fait que** l'unité de commande (11) est formée d'un commutateur associé au moniteur de sécurité (9), lequel peut être actionné pendant le fonctionnement du système de bus pour initialiser la phase de configuration.

4. Dispositif de commutation de sécurité selon la revendication 3, **caractérisé par le fait que** qu'un esclave du système de bus peut être remplacé pendant la phase de configuration initialisée au moyen du commutateur.

5. Dispositif de commutation de sécurité selon la revendication 4, **caractérisé par le fait qu'**une adresse est assignée à l'esclave nouvellement connecté.

6. Dispositif de commutation de sécurité selon l'une des revendications 5 ou 6, **caractérisé par le fait que** l'esclave nouvellement connecté peut être configuré dans la phase de configuration.

7. Dispositif de commutation de sécurité selon l'une des revendications 2 à 6, **caractérisé par le fait que** l'unité de commande est formée d'une unité de calcul connectable au moniteur de sécurité (9), au moyen de laquelle la phase de configuration peut être initialisée avant la mise en service du système de bus.

8. Dispositif de commutation de sécurité selon la revendication 7, **caractérisé par le fait que** des données d'entrée peuvent être entrées dans le moniteur de sécurité (9) via l'unité de calcul pour effectuer la configuration de composants du système de bus.

9. Dispositif de commutation de sécurité selon l'une des revendications 7 ou 8, **caractérisé par le fait que** l'unité de calcul est formée d'un ordinateur personnel.

10. Dispositif de commutation de sécurité selon l'une des revendications 1 à 9, **caractérisé par le fait que**, pendant la phase de configuration, des paramètres spécifiques à l'application sont fixés pour les esclaves via le moniteur de sécurité (9).

11. Dispositif de commutation de sécurité selon l'une des revendications 1 à 10, **caractérisé par le fait que**, pendant la phase de configuration, des paramètres spécifiques à l'équipement sont entrés par les esclaves dans le moniteur de sécurité (9).

12. Dispositif de commutation de sécurité selon la revendication 11, **caractérisé par le fait que** les esclaves lisent les codes définissant leur type d'équipement dans le moniteur de sécurité (9).

13. Dispositif de commutation de sécurité selon l'une des revendications 11 ou 12, **caractérisé par le fait que** les esclaves lisent les codes caractérisant leurs versions d'équipement dans le moniteur de sécurité (9).

14. Dispositif de commutation de sécurité selon l'une des revendications 10 à 13, **caractérisé par le fait qu'**avant la fin de la phase de configuration, une liste de toutes les données de configuration formées par les paramètres est élaborée et enregistrée dans le moniteur de sécurité (9).

15. Dispositif de commutation de sécurité selon l'une des revendications 1 à 14, **caractérisé par le fait que** le maître (4) est activé pendant la phase de configuration.

16. Dispositif de commutation de sécurité selon la revendication 15, **caractérisé par le fait que** la transmission de données entre les composants du système de bus pendant la phase de configuration correspond à la transmission de données pendant le fonctionnement du système de bus.

17. Dispositif de commutation de sécurité selon l'une des revendications 1 à 16, **caractérisé par le fait que** le maître (4) est désactivé pendant la phase de configuration et que le moniteur de sécurité (9) prend en charge la fonction de maître.

18. Dispositif de commutation de sécurité selon la revendication 17, **caractérisé par le fait que** pour sa désactivation le maître (4) est séparé du système de bus ou mis dans un mode hors ligne au moyen d'une instruction de commande.

19. Dispositif de commutation de sécurité selon l'une des revendications 17 ou 18, **caractérisé par le fait que** le système de bus présente plusieurs moniteurs de sécurité (9) pour commander différents groupes d'étages de sortie (3, 3') et que le moniteur de sécurité (9) activé au moyen de l'unité de commande (11) pendant la phase de configuration prend en charge la fonction de maître.

20. Dispositif de commutation de sécurité selon l'une des revendications 1 à 19, **caractérisé par le fait que** des étages d'entrée (12, 12') formant des esclaves sont connectés au système de bus, les signaux d'entrée générés par les étages d'entrée (12, 12') pouvant être entrés dans le moniteur de sécurité (9).

21. Dispositif de commutation de sécurité selon l'une des revendications 1 à 20, **caractérisé par le fait que** des étages d'entrée/sortie (10) formant des esclaves sont connectés au système de bus, les signaux d'entrée générés par les étages d'entrée/sortie (10) pouvant être entrés dans le moniteur de sécurité (9).

22. Dispositif de commutation de sécurité selon l'une des revendications 20 ou 21, **caractérisé par le fait que** les signaux d'entrée peuvent être entrés dans le moniteur de sécurité (9) sous la forme de codes.

23. Dispositif de commutation de sécurité selon l'une des revendications 20 à 22, **caractérisé par le fait que** le moniteur de sécurité (9) commande des étages de sortie (3, 3') en fonction de signaux d'entrée d'étages d'entrée (12, 12') et/ou d'étages d'entrée/sortie (10).

24. Dispositif de commutation de sécurité selon l'une des revendications 1 à 23, **caractérisé par le fait que** le moniteur de sécurité (9) présente une structure redondante.

25. Dispositif de commutation de sécurité selon la revendication 24, **caractérisé par le fait que** le moniteur de sécurité (9) est formé d'une unité à microprocesseur à deux canaux.

26. Dispositif de commutation de sécurité selon l'une des revendications 1 à 25, **caractérisé par le fait que** les esclaves présentent une structure redondante.

27. Dispositif de commutation de sécurité selon la revendication 26, **caractérisé par le fait qu'**il est prévu des actionneurs comme étages de sortie (3, 3').

28. Dispositif de commutation de sécurité selon la revendication 27, **caractérisé par le fait que** les actionneurs sont formés de relais.

29. Dispositif de commutation de sécurité selon l'une des revendications 27 ou 28, **caractérisé par le fait qu'**une interdiction de redémarrage est intégrée dans les étages de sortie (3, 3').

30. Dispositif de commutation de sécurité selon l'une des revendications 27 à 29, **caractérisé par le fait que** le signal de sortie d'un étage de sortie (3, 3') est formé d'une combinaison d'un signal de validation généré dans le moniteur de sécurité (9) et d'un signal de commande définissant le fonctionnement d'un équipement de travail (2, 2') d'une commande connectée au maître (4).

31. Dispositif de commutation de sécurité selon l'une des revendications 29 à 30, **caractérisé par le fait qu'**il est prévu des capteurs comme étages d'entrée (12, 12').

32. Dispositif de commutation de sécurité selon la revendication 31, **caractérisé par le fait que** les capteurs sont formés d'interrupteurs d'arrêt d'urgence.

33. Dispositif de commutation de sécurité selon l'une des revendications 25 à 32, **caractérisé par le fait qu'**il est prévu des capteurs comme étages d'entrée/sortie (10).

34. Dispositif de commutation de sécurité selon la revendication 33, **caractérisé par le fait que** les capteurs sont formés de barrières optiques.

35. Dispositif de commutation de sécurité selon la revendication 34, **caractérisé par le fait que** les capteurs sont formés de capteurs de distance plane optiques.

36. Dispositif de commutation de sécurité selon l'une des revendications 1 à 35, **caractérisé par le fait que** le système de bus est formé d'un système de bus capteur/actionneur.
